# EUROPEAN PATENT APPLICATION

(11) **EP 1 892 705 A2**
(43) Date of publication of application: **27.02.2008**
(21) Application number: 07106789.6
(22) Date of filing: 24.04.2007
(51) Int. Cl.: G11B 7/135

(54) **Optical pick-up**

(30) Priority: 22.08.2006 KR 20060079479
(71) Applicant: Samsung Electronics Co., Ltd., Suwon-si 442-742 Gyeonggi-do (KR)
(72) Inventor: Kim, Myoung Seok, Seoul (KR); Yoo, Jang Hoon, Yangcheon-gu, Seoul (KR)
(74) Representative: Perkins, Dawn Elizabeth

(57) **Abstract**

An optical pick-up including a first objective lens (21) having a numerical aperture (NA) suitable for a BD, a second objective lens (22) having an NA suitable for an HD-DVD, a light source to emit light beams suitable for the BD and the HD-DVD, a first beam splitter (30) to transmit and reflect the emitted beams emitted to be selectively guided to one of the first and second objective lenses, a grated diffraction element (50) to split the emitted beams into a zeroth order main beam and ±1^{st} order sub-beams that can be projected on a single track of the BD and the HD-DVD in series, a first optical detector (41) to receive a beam reflected by and returned from the BD, and a second optical detector (42) to receive a beam reflected by and returned from the HD-DVD, wherein the first and second optical detectors are positioned at similar distances from the first beam splitter.

## Description

The present invention relates to an optical pick-up, and more particularly, to an optical pick-up to compatibly reproduce and/or record information from/to a Blu-ray Disc (BD) and a High Definition Digital Versatile Disc (HD-DVD).

An optical disc is an information storing medium in which data, such as sound, images, documents, and the like, is recorded to and reproduced from optically. An optical pick-up is a device to reproduce information stored in the optical disc and to record information in the optical disc in a non-contact fashion using a semiconductor laser.

Generally, the optical pick-up is provided with a device to control a position of an objective lens in a focusing direction and a tracking direction such that a laser beam is properly focused on a desired track of a recording surface of the optical disc. There are several methods of detecting a tracking error signal for a tracking directional control, such as a tri-beam method, a push-pull (PP) method, a differential push-pull (DPP) method, and a differential phase detection (DPD) method. Among them, the DPP method uses a main beam projected to a center of the track and two sub-beams projected in a radial direction and a tangential direction of the optical disc by being spaced apart from the main beam. When using the DPP method, reproduction and/or recording of information from/to the optical disc are enabled and an error signal can be detected with a relatively simple optical system.

Meanwhile, as examples of optical discs that are commercially produced today, there are a Compact Disc (CD) and a Digital Versatile Disc (DVD). Recently, high density recording media, as a next generation optical disc which have a recording capacity significantly increased, such as the Blu-ray Disc (BD) and the High Definition Digital Versatile Disc (HD-DVD), have been vigorously researched. However, in the present next generation optical disc market, a standard of the BD and the HD-DVD is not yet built. In order to manage this situation, it is necessary to develop an optical pick-up compatible with the different BD and HD-DVD standards.

When implementing the compatible optical pick-up, it may be preferred to build an optical system using a single light source and a single compatible objective lens for both the BD and HD-DVD, so that the number of the optical components required in the optical system can be minimized. However, there is a technical difficulty to develop the compatible objective lens for both the BD and the HD-DVD.

As a solution to the above problem, an optical system can be built by employing a single light source and two objective lenses (an objective lens for the BD and an objective lens for the HD-DVD). However, even in this case, since the standard of the BD is different from that of the HD-DVD, the DPP method cannot be applied to any one of the BD and the HD-DVD. In other words, when a diffraction element (an element to generate the tri-beam for the detection of the tracking error signal) is adjusted according to the standard of the BD, the DPP method cannot be applied to the HD-DVD, and conversely, the DPP method cannot be applied to the BD when the diffraction element is adjusted according to the standard of the HD-DVD. Therefore, another tracking-servo method, such as a DPD method, must be used for an optical disc to which the DPP method cannot be applied. In this case, the optical disc to which the DPD is applied may only be reproduced and cannot be recorded upon.

The present invention provides an optical pick-up to reproduce and/or record information from/to a BD and an HD-DVD to be compatible with the BD and the HD-DVD.

Additional aspects and advantages of the present invention will be set forth in part in the description which follows and, in part, will be obvious from the description, or may be learned by practice of the invention.

The foregoing and/or other aspects and utilities of the present invention are achieved by providing an optical pick-up including a first objective lens having a numerical aperture suitable for a Blu-ray Disc (BD), a second objective lens having a numerical aperture suitable for High Definition Digital Versatile Disc (HD-DVD), a light source to emit light beams with wavelengths suitable for the BD and the HD-DVD, a first beam splitter to transmit and reflect the beams emitted from the light source according to polarizing components to be selectively guided to one of the first and second objective lenses, a diffraction element to split the beams emitted from the light source into a zeroth order main beam and ±1st order sub-beams and having a grating pattern such that the main beam and the sub-beams can be projected on a single track of the BD and the HD-DVD in series, a first optical detector to receive a beam reflected by and returned from the BD, and a second optical detector to receive a beam reflected by and returned from the HD-DVD, the first and second optical detectors being positioned such that distances from the first beam splitter are the same.

The optical pick-up may further include a polarizing switch disposed in an optical path between the light source and the first beam splitter to convert the polarizing components of the beams emitted from the light source.

The polarizing switch and the diffraction element may be integrally formed as a single optical device.

The optical pick-up may further include a second beam splitter to guide the beams reflected by the first beam splitter to one of the first objective lens and the second objective lens.

The first and second beam splitters may be integrally formed.

The optical pick-up may further include a third beam splitter to transmit and reflect the beams reflected by and returned from the BD and the HD-DVD according to the polarizing components of the reflected beams to be guided to one of the first optical detector and the second optical detector.

The optical pick-up may further include a first 1/4 wavelength plate installed in an optical path between the first objective lens and the first beam splitter, and a second 1/4 wavelength plate installed in an optical path between the second objective lens and the second beam splitter.

The foregoing and/or other aspects and utilities of the present invention are also achieved by providing an optical pick-up including a first objective lens having a numerical aperture suitable for a first optical disc, a second objective lens having a numerical aperture suitable for a second optical disc, a single light source to emit light beams with wavelengths suitable for the first and second discs, a diffraction element to split the beams emitted from the light source into a zeroth order main beam and ±1st order sub-beams and having a grating pattern such that the main beam and the sub-beams can be projected on a single track of the first and second optical discs in series, a beam splitter to transmit and reflect the beams emitted from the light source according to polarizing components of the beams to be selectively guided to one of the first and second objective lenses, a polarizing switch disposed between the light source and the beam splitter to convert the polarizing components of the beams emitted from the light source, and a single optical detector to detect a light beam reflected by and returned from the first and second optical discs.

The foregoing and/or other aspects and utilities of the present invention are also achieved by providing an optical pickup, including a first objective lens having a first numerical aperture to read data from and record data to a first type of optical disc, a second objective lens having a second numerical aperture different from the first numerical aperture to read data from and record data to a second type of optical disc, a single light source to provide a light beam to at least the first and second objective lenses; a grated diffraction element to split the beam emitted from the light source into a zeroth order main beam and ±1^{st} order sub-beams and to allow the main beam and the sub-beams to be projected on a single track of an optical disc in series through at least one of the first and second objective lenses, and a detector unit comprising a single optical detector to detect a light beam reflected back from the optical disc through at least one of the first and second objective lenses.

The foregoing and/or other aspects and utilities of the present invention are also achieved by providing an optical pickup, including a first objective lens having a first numerical aperture to read data from and record data to a first type of optical disc, a second objective lens having a second numerical aperture different from the first numerical aperture to read data from and record data to a second type of optical disc, a single light source to provide a light beam to at least the first and second objective lenses; a grated diffraction element to split the beam emitted from the light source into a zeroth order main beam and ±1^{st} order sub-beams and to allow the main beam and the sub-beams to be projected on a single track of an optical disc in series through at least one of the first and second objective lenses, and a detector unit to detect a light beam reflected back from the optical disc through at least one of the first and second objective lenses, wherein the detector unit comprises a first optical detector and a second optical detector to detect the beam reflected back through at least the first and second objective lenses, respectively, and the first and second optical detectors are disposed at substantially similar distance from the grated diffraction element.

The foregoing and/or other aspects and utilities of the present invention are also achieved by providing an optical pick-up, including at least two objective lenses, wherein a first one of the at least two objective lenses has a first numerical aperture to read data from and record data to a first type of optical disc, and a second one of the at least two objective lenses has a second numerical aperture different from the first numerical aperture to read data from and record data to a second type of optical disc, a light source to provide a light beam to at least the first and second ones of the at least two objective lenses, a grated diffraction element to split the light beam emitted from the light source to at least the first and second ones of the at least two objective lenses into a zeroth order main beam and ±1^{st} order sub-beams and to allow the main beam and the sub-beams to be projected on a single track of an optical disc in series through one of the corresponding objective lenses of the at least two objective lenses, and an optical detector unit to detect a light beam reflected back from the optical disc through at least one of the at least two objective lenses, wherein the optical detector unit comprises a first optical detector to detect the light beam reflected back from the optical disc through at least one of the first and second ones of the at least two objective lenses.

The foregoing and/or other aspects and utilities of the present invention are also achieved by providing an optical pick-up, including at least two objective lenses, wherein a first one of the at least two objective lenses has a first numerical aperture to read data from and record data to a first type of optical disc, and a second one of the at least two objective lenses has a second numerical aperture different from the first numerical aperture to read data from and record data to a second type of optical disc, a light source to provide a light beam to at least the first and second ones of the at least two objective lenses, a grated diffraction element to split the light beam emitted from the light source to at least the first and second ones of the at least two objective lenses into a zeroth order main beam and ±1^{st} order sub-beams and to allow the main beam and the sub-beams to be projected on a single track of an optical disc in series through one of the corresponding objective lenses of the at least two objective lenses, and an optical detector unit to detect a light beam reflected back from the optical disc through at least one of the at least two objective lenses, wherein the optical detector unit comprises a first and a second optical detector to detect the light beam reflected back from the optical disc through at least the first and second of the at least two objective lenses, respectively., and the first and second optical detectors are disposed at substantially similar distance from the grated diffraction element.

These and/or other aspects and advantages of the present general inventive will become apparent and more readily appreciated from the following description of the embodiments, taken in conjunction with the accompanying drawings in which:
Figure 1 is a schematic view illustrating a configuration of an optical pick-up according to an embodiment of the present invention; and
Figure 2 is a schematic view illustrating a configuration of an optical pick-up according to another embodiment of the present invention.

Reference will now be made in detail to the embodiments of the present invention, examples of which are illustrated in the accompanying drawings, wherein like reference numerals refer to the like elements throughout.

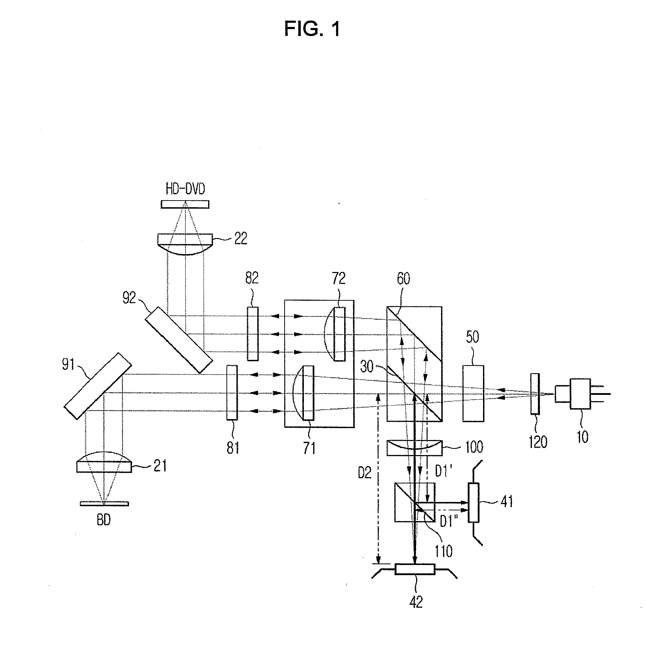

Figure 1 is a schematic view illustrating a configuration of an optical pick-up according to an embodiment of the present invention. As illustrated in Figure. 1, the optical pick-up may include a light source 10 to emit light beams with wavelengths suitable to reproduce and/or record information from/to a BD and an HD-DVD, a first objective lens 21 to focus the beam on the BD to reproduce and/or record information from/to the BD, a second objective lens 22 to focus the beam on the HD-DVD to reproduce and/or record information from/to the HD-DVD, a first beam splitter 30 to transmit or reflect the beam emitted from the light source 10 to be guided to the first objective lens 21 or the second objective lens 22, a first optical detector 41 to detect an information signal and an error signal by receiving a returning beam reflected by the BD, and a second optical detector 42 to detect an information signal and an error signal by receiving a returning beam reflected by the HD-DVD.

The light source 10 can be a laser diode to emit a blue beam with a wavelength of about 405 nm and is commonly used to reproduce information using the BD and the HD-DVD.

The first objective lens 21 can have a numerical aperture of about 0.85, which is suitable to reproduce and/or record information from/to the BD, and the second objective lens 22 can have a numerical aperture of about 0.65, which is suitable to reproduce and/or record information from/to the HD-DVD. Here, for example, the first and second objective lenses 21 and 22 can be mounted in an actuator (not illustrated) to be parallel to each other and can be driven in the focusing direction and in the tracking direction to compensate for error.

The first beam splitter 30 can be a polarizing-dependence beam splitter to transmit or reflect the beam according to a polarizing component of an incident beam, and can direct the incident beam from the light source 10 to enter one of the first and second objective lenses 21 and 22 and the beam reflected by the optical discs, for example, the BD and HD-DVD, toward the optical detectors 41 and 42.

At a front side of the first beam splitter 30 in an optical path, a polarizing switch 50 can be disposed to serve as a 1/2 wavelength plate when power is applied to convert the polarizing component of the incident beam from the light source 10. For example, in a case of a P-polarized beam entering the polarizing switch 50, the P-polarized beam can be converted into an S-polarized beam to enter the first beam splitter 30 when electric power is applied to the polarizing switch 50, and to enter the first beam splitter 30 as it is when power is not applied to the polarizing switch 50.

At a rear side of the first beam splitter 30 in the optical path from the light source 10 to the second objective lens 22, a second beam splitter 60 can be disposed to reflect the beam reflected by the first beam splitter 30 once more toward the second objective lens 22. The second beam splitter 60 can be integrally formed with the first beam splitter 30 such that a space for the disposal of the first and second beam splitters 30 and 60 can be effectively used.

Moreover, in an optical path between the first beam splitter 30 and the first objective lens 21, a first collimating lens 71, a first 1/4 wavelength plate 81, and a first mirror 91 can be arranged, and in a similar way, in an optical path between the second beam splitter 60 and the second objective lens 22, a second collimating lens 72, a second 1/4 wavelength plate 82, and a second mirror 92 can also be arranged.

The first and second collimating lenses 71 and 72 convert a beam emitted from the light source 10 into a parallel beam directed toward the first objective lens 21 or the second objective lens 22, respectively, and the first and second 1/4 wavelength plates 81 and 82 convert the polarizing components of the returning beam reflected by the BD or the HD-DVD, respectively. The first and second mirrors 91 and 92 reflect the incident beam from the light source 10 to the first objective lens 21 or the second objective lens 22, respectively.

Meanwhile, in an optical path between the first beam splitter 30 and the first optical detector 41 or in an optical path between the first beam splitter 30 and the second optical detector 42, an astigmatic lens 100 can be arranged to generate astigmatism such that a focus error signal is detected by an astigmatism method and a third beam splitter 110 can be arranged to reflect or transmit the beam reflected by the BD and the HD-DVD and returned via the first beam splitter 30 to be guided toward the first optical detector 41 or the second optical detector 42.

In an optical path between the light source 10 and the polarizing switch 50, a diffraction element 120 can be arranged to form a tri-beam to detect the tracking error signal using the DPP method.

The diffraction element 120 splits the beam emitted from the light source 10 into a main beam MB as a zeroth-order diffracted beam and sub-beams SB1 and SB2 as ± 1 order diffracted beam. Particularly, a grating pattern of the diffraction element 120 is formed such that, the separated main beam MB and the sub-beams SB1 and SB2 are projected on a single track of the BD and the HD-DVD in series. Then, the tracking error signal can be detected by the DPP method in the BD and the HD-DVD with different track pitches. In order to generate a phase difference of 180 degrees between the error signals detected by the first optical detector 41 or the second optical detector 42 by the main beam MB and the sub-beams SB1 and SB2 in the push-pull to apply a general DPP method, the diffraction element 120 must have a specific grating pattern. Since the diffraction element having the grating pattern is disclosed in Japanese Unexamined Patent Application Publication No. H9-81942, Korean Unexamined Patent Application Publication No. 2006-84688, and other patent publications, its description will be omitted.

Particularly, in the present invention, the first and second optical detectors 41 and 42 are positioned such that a distance D1' + D1" of an optical path from the first beam splitter 30 to the first optical detector 41 is identical to a distance D2 of an optical path from the first beam splitter 30 to the second optical detector 42, so that two identical photo diode integrated circuits (PDIC) can be used as the first and second optical detectors 41 and 42, and as a result, common optical components can be used.

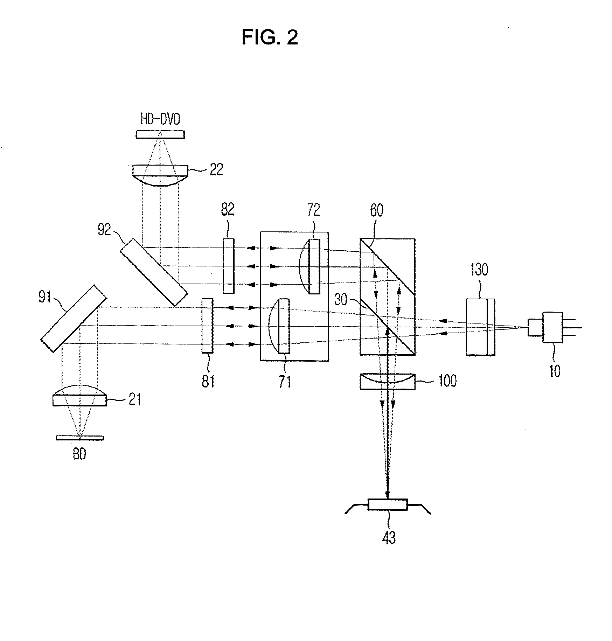

Figure. 2 is a schematic view illustrating a configuration of an optical pick-up according to another embodiment of the present invention. The optical pick-up in Figure. 2 is similar to the optical pick-up illustrated in Figure. 1, except that the diffraction element 120 and the polarizing switch 50 are integrally formed as a single optical device 130, and a single common optical detector 43 receives both a beam reflected by and returned from the BD and a beam reflected by and returned from the HD-DVD. The components illustrated in Figure. 2 which are similar to those illustrated in Figure. 1 are indicated by the same reference numerals, and detailed descriptions thereof are omitted for brevity and conciseness of the description.

Due to the configuration of the optical pick-up as described above, the number of the components can be minimized so that the optical pick-up can be compact. In this embodiment, the integration of the diffraction element 120 and the polarizing switch 50 as the single optical device 130 can be applied to the embodiment illustrated in Figure. 1 as it is, that is, using two different optical detectors 41 and 42, or alternatively, as illustrated in Figure. 2, using a single common optical detector 43.

Hereinafter, operation of an optical pick-up according to an embodiment of the present invention will be described by an example of a case of a P polarized beam being emitted from the light source of the optical pick-up in Figure. 1. According to this embodiment, a tri-beam is formed such that the P-polarized beam emitted from the light source 10 passes through the diffraction element 120 and is diffracted to detect the tracking error signal in the DPP method. The beam passing through the diffraction element 120 passes through the polarizing switch 50, wherein the polarizing switch 50 passes the P-polarized beam as it is when reproducing or recording information from/to the BD and converts the P-polarized beam into an S-polarized beam when reproducing or recording information from/to the HD-DVD.

When reproducing or recording information from/to the BD, the P-polarized beam passing through the polarizing switch 50 is transmitted through the first beam splitter 30 as it is and passes through the first collimating lens 71 and the first 1/4 wavelength plate 81 and enters the first objective lens 21. In this case, the first collimating lens 71 converts a divergent beam into a parallel beam and the first 1/4 wavelength plate 81 converts the P-polarized beam into a circular wave beam. The beam passing through the first 1 /4 wavelength plate 81 forms a light spot on the recording surface of the BD by the first objective lens 21, and at that time, a zeroth order main beam and ± 1st order sub-beams separated by the diffraction element 120 form light spots on a single track of the BD in series.

After the formation of the light spots on the recording surface of the BD, the beams are reflected and a rotating direction of the circular wave is opposite to that when the circular wave enters. The beams reflected by the BD are transmitted through the first 1/4 wavelength plate 81 via the first objective lens 21 and the beam with a circular wave becomes the S-polarized beam at that time. The S-polarized beam is reflected by the first beam splitter 30 via the first collimating lens 71 and by the third beam splitter 110 and is received by the first optical detector 41 so that the error signal for the tracking control is detected.

Meanwhile, when reproducing or recording information from/to the HD-DVD, the electric power is applied to the polarizing switch 50 such that a P-polarized beam emitted from the light source 10 passes through the polarizing switch 50 and is converted into an S-polarized beam. The S-polarized beam is reflected by the first beam splitter 30 toward the second beam splitter 60 and by the second beam splitter 60 toward the second objective lens 22. The beam reflected by the second beam splitter 60 passes through the second collimating lens 72 and the second 1/4 wavelength plate 82 and forms a light spot on the recording surface of the HD-DVD by the second objective lens 22. The beam forming the light spot on the recording surface of the HD-DVD passes through the second 1/4 wavelength plate 82 while being reflected and returned, and becomes a P-polarized beam at that time. The P-polarized beam enters the first beam splitter 30 via the second collimating lens 72 and the second beam splitter 60, wherein the beam entering the first beam splitter 30 is transmitted through the first beam splitter 30 as it is and enters the third beam splitter 110. The beam entering the third beam splitter 110 is transmitted through the third beam splitter 110 as it is and is received by the second optical detector 42 so that the error signal for the tracking control is detected.

Particularly, since, in the present invention, the optical detectors 41 and 42 are positioned such that the distance D1' + D1" of the optical path from the first beam splitter 30 to the first optical detector 41 is identical to the distance D2 of the optical path from the first beam splitter 30 to the second optical detector 42, an identical PDIC can be used as the first and second optical detectors 41 and 42.

As described above, the present invention uses a single light source and two objective lenses to build an optical system and applies the DPP method for the tracking control to both of the BD and the HD-DVD so that reproducing and/or recording information from/to the BD and the HD-DVD are enabled.

Moreover, the present invention implements an optical detector for the BD and an optical detector for the HD-DVD using identical PDICs so that components can be commonly used.

Although a few embodiments of the present invention have been shown and described, it would be appreciated by those skilled in the art that changes may be made in these embodiments without departing from the scope of the present invention as defined in the claims.

## Claims

1. An optical pickup, comprising:
a first objective lens (21) having a first numerical aperture to read data from and/or record data to a first type of optical disc;
a second objective lens (22) having a second numerical aperture different from the first numerical aperture to read data from and/or record data to a second type of optical disc;
a single light source (10) to provide a light beam to the first and second objective lenses (21, 22);
a grated diffraction element (50, 130) configured to split the beam emitted from the light source (10) into a zeroth order main beam and ±1^{st} order sub-beams and to allow the main beam and the sub-beams to be projected on a single track of an optical disc in series through at least one of the first and second objective lenses (21, 22); and
a detector unit (41, 42, 43) configured to detect a light beam reflected back from the optical disc through at least one of the first and second objective lenses (21, 22).

2. The optical pick-up according to clam 1, wherein the detector unit comprises a first optical detector (41) and a second optical detector (42) configured to detect the beam reflected back through the first and second objective lenses (21, 22), respectively.

3. The optical pick-up according to claim 2, wherein the first and second optical detectors (41, 42) are disposed at substantially the same distance from the grated diffraction element (50, 130).

4. The optical pick-up according to claim 1, wherein the detector unit comprises a single optical detector (43) arranged for detecting the light beam reflected back through either of the objective lenses (21, 22).

5. The optical pick-up according to any one of the preceding claims, further comprising:
a beam splitter (30) configured to transmit and reflect the beam emitted from the light source (10) according to polarizing components to be selectively guided to one of the first and second objective lenses (21, 22).

6. The optical pick-up according to claim 5, further comprising:
a polarizing switch (120, 130) disposed in an optical path between the light source (10) and the first beam splitter (30) to convert the polarizing components of the beam emitted from the light source (10).

7. The optical pick-up according to claim 6, wherein the polarizing switch and the diffraction element are integrally formed as a single optical device (130).

8. The optical pick-up according to any one of claims 5 to 7, further comprising:
a second beam splitter (60) configured to guide the beams reflected by the first beam splitter (30) to one of the first objective lens (21) and the second objective lens (22).

9. The optical pick-up according to claim 8, wherein the first and second beam splitters (30, 60) are integrally formed.

10. The optical pick-up according to claim 8 or 9, further comprising:
a first 1/4 wavelength plate (81) installed in an optical path between the first objective lens (21) and the first beam splitter (30); and
a second 1 /4 wavelength plate (82) installed in an optical path between the second objective lens (22) and the second beam splitter (60).

11. The optical pick-up according to claim 2 or 3, further comprising:
a beam splitter (110) configured to transmit and reflect the beams reflected back through the first and second objective lenses (21, 22) according to the polarizing components of the reflected beams to be guided to one of the first optical detector (41) and the second optical detector (42).

12. The optical pick-up according to any one of the preceding claims, wherein the first type of optical disc comprises a Blu-ray Disc and the second type of optical disc comprises a High Definition Digital Versatile Disc.
